# EUROPÄISCHE PATENTSCHRIFT

(11) **EP 1 455 982 B1**
(45) Veröffentlichungstag und Bekanntmachung des Hinweises auf die Patenterteilung: **13.02.2008**
(21) Anmeldenummer: 02793074.2
(22) Anmeldetag: 18.12.2002
(51) Int. Cl.: B23K 1/00, F01D 5/14

(54) **WERKSTÜCK MIT EINER NACH AUSSEN DURCH EINE LÖTFOLIE VERSCHLOSSENEN AUSNEHMUNG UND VERFAHREN ZUM VERSCHLIESSEN EINER AUSNEHMUNG MIT EINER LÖTFOLIE**
WORKPIECE WITH A RECESS WHICH IS CLOSED FROM THE EXTERIOR BY MEANS OF A SOLDER FILM AND METHOD FOR CLOSING A RECESS BY MEANS OF A SOLDER FILM
PIECE POURVUE D'UN EVIDEMENT FERME VERS L'EXTERIEUR PAR UNE FEUILLE DE SOUDURE ET PROCEDE POUR OBTURER UN EVIDEMENT AU MOYEN D'UNE FEUILLE DE SOUDURE

(30) Priorität: 21.12.2001 EP 01130728
(43) Veröffentlichungstag der Anmeldung: 15.09.2004
(73) Patentinhaber: SIEMENS AKTIENGESELLSCHAFT, 80333 München (DE)
(72) Erfinder: JEUTTER, Andre, 71120 Grafenau (DE); SETTEGAST, Silke, 10439 Berlin (DE)
(86) Internationale Anmeldenummer: PCT/EP2002/014501
(87) Internationale Veröffentlichungsnummer: WO 2003/053622

(56) Entgegenhaltungen:
- EP-A- 1 154 124
- DE-C- 903 405
- US-A- 3 843 333
- US-A- 3 934 322
- US-A- 5 968 299

## Beschreibung

Die Erfindung betrifft ein Werkstück nach dem Oberbegriff des Anspruchs 1 und ein Verfahren zum Verschliessen einer Ausnehmung.

Lötfolien werden beispielsweise verwendet zur stoffschlüssigen Verbindung von Bauteilen, wie es aus der US-PS 5,557,837 bekannt ist. Dabei wird die Lötfolie, die aus einem Lötwerkstoff besteht, dessen Schmelzpunkt deutlich unterhalb des Schmelzpunkts der miteinander zu verbindenden Bauteilen liegt, aufgeschmolzen und verbindet ein nicht aufschmelzendes Einlegeteil, das in eine Ausnehmung eines anderen Bauteils eingesteckt ist.

Ebenso ist es bekannt, Risse oder Öffnungen mit Lotpulver zu füllen, wobei das Lotpulver über dem Riss oder über der Öffnung angehäuft und durch die Wärmezufuhr aufgeschmolzen wird, so dass es in den Riss oder die Öffnung hineinläuft, wie es beispielsweise aus der US-PS 4,098,450 bekannt ist. Insbesondere bei grossen auszufüllenden Ausnehmungen kommt es bei der Abkühlung des Lots wegen der Schrumpfung beim Erstarren vielfach zu Rissen. Das Lot kann in unerwünschter Weise bei Hohlkörpern (z.B. eine hohle Turbinenschaufel), die mit einem zu verschließenden Loch versehen sind, in das Innere des Hohlkörpers eindringen

Ebenso ist es bekannt, Lötfolien zur Beschichtung von Materialien zu benutzen, wie es aus der US-PS 5,968,299 bekannt ist.

Die EP 1 154 124 A1 offenbart eine Öffnung in einer Turbinenschaufel, die durch Anlöten oder Anschweißen eines Metallstreifens verschlossen ist.

Die US 5,968,299 offenbart einen Grundkörper, bei der eine Beschichtung durch einen Lötwerkstoff mit dem Grundkörper verbunden ist.

Insbesondere bei Gussteilen wie z.B. Turbinenschaufeln (gegossen, gerichtet erstarrt, einkristallin) sind vielfach fertigungsbedingt Sacklöcher oder Durchgangslöcher vorhanden, die verschlossen werden sollen, weil bspw. sonst in unerwünschter Weise Kühlluft aus dem Inneren der Turbinenschaufel durch diese Löcher heraustritt, was den Wirkungsgrad der Turbine verringert.

Aufgabe der Erfindung ist es, ein gattungsgemäßes Werkstück dahingehend weiterzubilden, dass seine Ausnehmungen rissfreie Abschlüsse aufweisen, und ein Verfahren zum Verschliessen von Ausnehmungen in einem Werkstück anzugeben, das auf einfache Art und Weise durchführbar ist.

Diese Aufgabe wird hinsichtlich des Werkstücks gelöst durch die kennzeichnenden Merkmale des Patentanspruchs 1. Vorteilhafte Weiterbildungen ergeben sich aus den abhängigen Ansprüchen. Ein Verfahren zum Verschließen von Ausnehmungen weist erfindungsgemäß die Merkmale des Patentanspruchs 13 auf und ist durch die Merkmale des Anspruchs 14 in vorteilhafter Weise weiter ausgestaltbar.
Die Erfindung sieht vor, dass das Werkstück eine Lötfolie aufweist, die die jeweilige Öffnung der Ausnehmung abdeckt und zumindest im Randbereich der Ausnehmung an einer Oberfläche des Werkstücks mit dem Grundkörper verlötet ist bzw. wird. Dabei ist es wesentlich, dass die Lötfläche zur Vermeidung von Rissen bei der Erstarrung nach dem Löten nur teilweise aus einem Lotwerkstoff besteht.

Die Ausnehmung kann ein Sackloch oder ein Durchgangsloch sein, so dass verschiedene Arten von Ausnehmungen durch die Lötfolie vorteilhafterweise verschlossen sind bzw. werden.

Das Werkstück kann vorteilhafterweise eine Turbinenschaufel für den Einsatz im Hochtemperaturbereich einer Turbine oder Gasturbine in einer korrosiven und errosiven Umgebung sein.

Die Zusammensetzung der Lötfolie aus Grundwerkstoff und Lot wird dem Werkstück und den jeweils vorgesehenen Betriebsbedingungen bzw. der Größe der Ausnehmung angepasst, so dass das Ausnehmung auch während des gesamten Einsatzes des Werkstücks verschlossen bleibt.

Die Lötfolie kann vorteilhafterweise bis zu vier Millimeter dick sein, so dass eine ausreichende mechanische Stabilität gewährleistet ist und auch große Löcher durch die Lötfolie dicht verschlossen sind bzw. werden.

Wenn die Wärmezufuhr zum Verschließen der Ausnehmung, d.h. zum Aufschmelzen des Lotwerkstoffs im Zuge einer Wärmebehandlung des Werkstücks erfolgt, insbesondere im Zuge einer Ausscheidungshärtung oder eines Lösungsglühens des Werkstücks, dann erübrigt sich ein gesonderter Verfahrensschritt zur Verbindung von Lötfolie und Werkstück.

Mehrere Ausführungsbeispiele des erfindungsgemäßen Werkstücks bzw. des erfindungsgemäßen Verfahrens sind in den Figuren dargestellt und werden mit weiteren Einzelheiten der Erfindung nachfolgend näher erläutert.

Es zeigen
Figur 1 a, b, c zwei Ausführungsbeispiele eines erfindungsgemässen Werkstücks,
Figur 2 ein weiteres Ausführungsbeispiel eines erfindungsgemässen Werkstücks,
Figur 3a bis c verschiedene Verfahrensschritte zum Verschliessen einer Ausnehmung eines Werkstücks mit einer Lötfolie und
Figur 4a, b ein vollständiges Ausfüllen einer Ausnehmung.

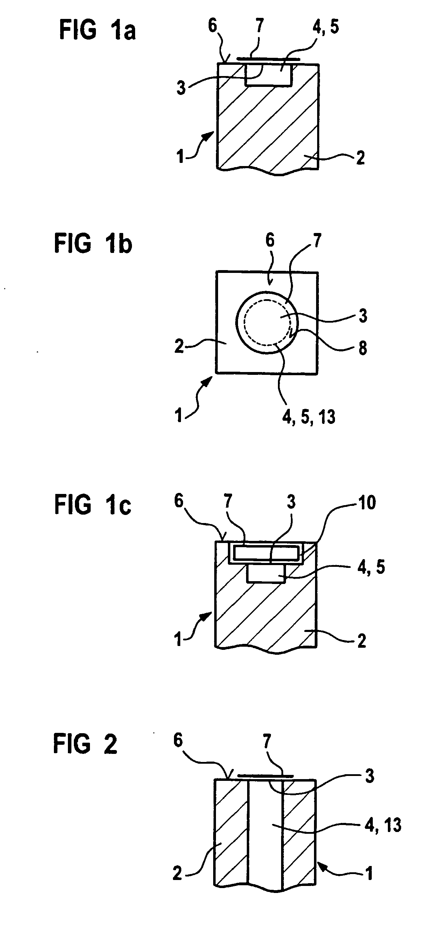

Figur 1a zeigt ein Werkstück 1, bestehend aus einem Grundkörper 2, der zumindest eine Ausnehmung 4, bspw. ein Sackloch 5 aufweist.

Über diesem Sackloch 5 auf einer Oberfläche 6 des Werkstücks 1 ist eine Lötfolie 7 aufgelegt. Die Lötfolie 7 wird durch eine anschliessende Behandlung bei höheren Temperaturen auf die Oberfläche 6 aufgelötet, so dass ein stoffschlüssiger Abschluss zwischen Lötfolie 7 und Werkstück 1 bzw. Grundkörper 2 vorliegt.

Figur 1b zeigt eine Aufsicht auf die Ausnehmung 4, 5 der Figur 1a mit der aufgelegten Lötfolie 7.
Der Öffnungsquerschnitt bzw. eine Öffnung 3 des Sacklochs 5 ist gestrichelt angedeutet. Die Aussenkontur der Lötfolie 7 ist dem Öffnungsquerschnitt des Sacklochs 4 angepasst und überragt den Öffnungsquerschnitt des Sacklochs 5 zumindest teilweise, so dass es zumindest teilweise auf der Oberfläche 6 in einem Auflagebereich 8 aufliegt. In diesem Auflagebereich 8 ist eine gute Verbindung zwischen Lötfolie 7 und Werkstück 1 nach einer Verlötung vorhanden.

Figur 1c zeigt ausgehend von Figur 1a ein weiteres Ausführungsbeispiel, bei dem das Sackloch 5 schon bei der Herstellung oder nachträglich eingebracht eine bspw. stufenförmige Querschnittserweiterung 10, im oberflächennahen Bereich aufweist. In diese Querschnittserweiterung 10 wird die Lötfolie 7 passend eingelegt, so dass die Lötfolie 7 auf dem Grund der hierdurch geschaffenen bspw. ringförmig umlaufenden Vertiefung zumindest teilweise aufliegt und nach dem Verlöten wiederum eine glatte Oberfläche 6 entsteht. Die Lötfolie 7, die dünn ausgeführt ist, und daher weniger wesentlich Material als ein die Ausnehmung 4, 5 ausfüllender Stopfen aufweist, neigt selten zur Rissbildung beim Abkühlen, d.h. beim Schrumpfen.

Figur 2 zeigt ein weiteres Ausführungsbeispiel eines erfindungsgemässen Werkstücks. Im Unterschied zu Figur 1a weist das Werkstück 1 kein Sachloch, sondern ein Durchgangsloch 13 auf, dessen Öffnung 3 durch die Lötfolie 7 verschlossen ist bzw. wird.

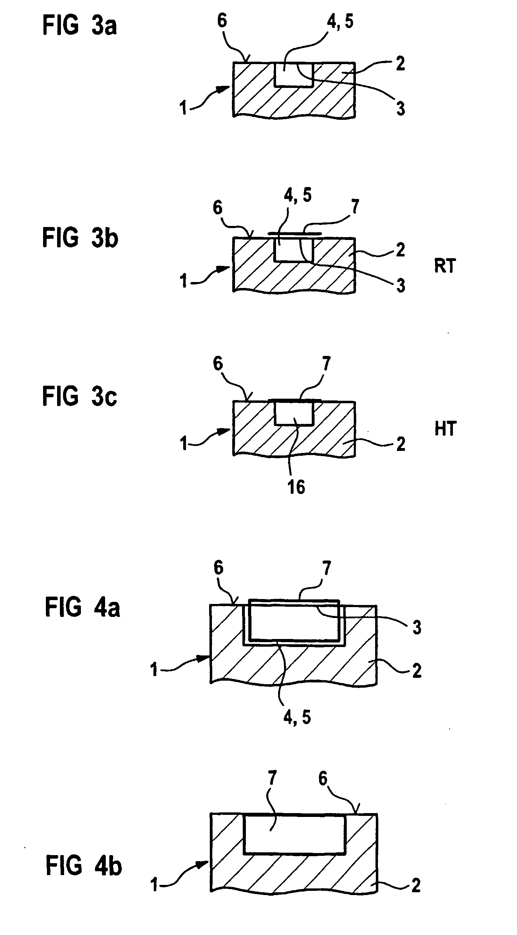

In den Figuren 3a bis c sind Verfahrensschritte zur Herstellung eines Werkstücks 1 mit verschlossener Ausnehmung 4, 5, 13 dargestellt.

Figur 3a zeigt ein Werkstück 1 bspw. mit einem Sackloch 5. Auf das Sackloch 5 wird eine entsprechend ausgestanzte oder ausgeschnittene Lötfolie 7 bei Raumtemperatur RT auf das Sackloch 5 aufgelegt, wie es in Figur 3b dargestellt ist. Das Werkstück 1 mit der aufgelegten Lötfolie 7 wird, um das Grundwerkstoff des Grundkörpers 2 bzw. des Werkstücks 1 z.B. einer Ausscheidungshärtung zu unterziehen, einer Wärmebehandlung bei höheren Temperaturen (HT) ausgesetzt, bei dem die Lötfolie sich mit dem Werkstück 1 verbindet, so dass sich ein nach außen verschlossener Hohlraum 16 unter der Lötfolie 7 bildet.

Es muss nicht notwendigerweise das ganze Werkstück 1 mit der Lötfolie 7 einer Wärmebehandlung bei höheren Temperaturen unterzogen werden. Es reicht beispielsweise aus, den Auflagebereich 8 der Lötfolie 7, der auf der Oberfläche 6 aufliegt (Fig.1 b), beispielsweise durch eine Laserbehandlung oder sonstige energieeinbringende Verfahren so zu erwärmen, dass ein Löten in diesem Bereich zwischen Lötfolie 7 und Oberfläche 6 stattfindet.

Die Zusammensetzung der Lötfolie 7 besteht aus dem Grundwerkstoff des Werkstücks 1 und einem Lotwerkstoff, die den jeweiligen Betriebsbedingungen, wie z.B. im Hochtemperaturbereich, korrosive und/oder erosive Umgebung, des Werkstücks 1 angepasst werden kann. Die Zusammensetzung und Abmessungen der aus bspw. gepresstem, feinteiligen Material bestehenden Lötfolie werden so gewählt, dass sie auch den mechanischen Belastungen im Einsatz standhalten. Dabei weist die Lötfolie einen hohen Anteil des unter Lötbedingungen nicht aufschmelzenden Grundwerkstoffs und einen geringen Anteil aus aufschmelzendem Lotwerkstoff auf. Der Volumenanteil des nicht aufschmelzenden Werkstoffs überragt den Volumenanteil des aufschmelzenden Lotwerkstoffs und liegt zweckmäßigerweise bei über 60% insbesondere bei 70%. Auch noch grössere Anteile sind möglich, z.B. 80% oder 90%. Diese Zusammensetzung und die Temperatur (Löttemperatur), bei der gelötet wird, wird so gewählt, dass das Lot gerade aufschmilzt und eine gute Verbindung von Lötfolie 7 und Werkstück 1 gewährleistet ist. Durch das Aufschmelzen des Lotwerkstoffs werden die einzelnen Körner des verpressten nicht aufschmelzenden Pulvers der Lötfolie 7 miteinander verbunden. Die Lötfolie 7 ist durch das zugesetzte nichtschmelzende Material bei der Löttemperatur noch so zäh, d.h. sie weist eine so hohe Viskosität auf, dass sie nicht oder kaum in die Ausnehmung 4, 5, 13 einsackt. Durch den hohen Anteil an nicht aufschmelzendem Werkstoff und Rest aufschmelzendes Lot der Lötfolie 7 wird insbesondere verhindert, dass sich Risse bilden.

Figur 4a, b zeigt ein Werkstück 1, bei dem ein Sackloch 5 durch eine Lötfölie 7 vollständig ausgefüllt ist.
Dabei wird eine Lötfolie 7 bspw. in das Sackloch 5 ungefähr passend eingelegt, d.h. sie entspricht mit ihren Abmessungen im Querschnitt dem Sackloch 5. Die Höhe der Lötfolie 7 ist so bemessen, dass es nach dem zumindest partiellen Aufschmelzen im Randbereich der Lötfolie 7 möglichst zu keinem Überstand an der Oberfläche 6 kommt (Fig. 4b).

Die Lötfolie 7 muss aber nicht notwendigerweise in die Ausnehmung 4, 5 eingelegt werden. Die Masse der Lötfolie 7 muss nur so bemessen sein, dass die aufgeschmolzene Lötfolie 7 in die Ausnehmung 4, 5 eindringt und diese ausfüllt.
In diesem Fall wird die Zusammensetzung der Lötfolie 7 aus Grundwerkstoff und Lotwerkstoff und ihrer sich daraus ergebenden Viskosität bei der Löttemperatur so gewählt, dass der Lotwerkstoff und der Grundwerkstoff in die Ausnehmung 4 eindringen kann und vollständig ausfüllt.
Der Vorteil der Lötfolie 7 liegt darin, dass die Lötfolie 7 gegenüber einer Paste oder einer Pulverschüttung eine sehr hohe Dichte aufweist und die eingebrachte Masse durch die gewählte Größe der Lötfolie 7 sehr genau bemessbar ist, so dass der Schrumpf minimal ist und eine Rissbildung reproduzierbar verhindert und zumindest reduziert ist.

Das Werkstück 1 ist bspw. eine Turbinenschaufel, bestehend bspw. aus einer Nickel-Basis-Superlegierung.

Das Werkstück 1 muss bspw. nach seiner Herstellung oder beim Refurbishment (Wiederherstellen eines benutzten Werkstücks) besonderen Wärmebehandlungen unterzogen werden, um bestimmte Materialeigenschaften zu erzielen.
Wird das gesamte Werkstück 1 bei einer solchen Wärmebehandlung mit der Lötfolie 7 erwärmt, um die Ausnehmung 4 äußerlich zu verschliessen oder vollständig mit einem Lotmaterial auszufüllen, so kann die Zusammensetzung der Lötfolie 7 so ausgewählt werden, dass bei dieser Wärmebehandlung, die beispielsweise ein Lösungsglühen oder eine Ausscheidungshärtung des Werkstücks 1 bezweckt, auch ein Aufschmelzen des Lotwerkstoffs erfolgt, so dass ein separater thermischer Verfahrensschritt zur Verlötung bei der Herstellung des Werkstücks 1 entfällt.

## Patentansprüche

1. Werkstück (1),
das im wesentlichen aus einem Grundkörper (2) gebildet ist,
der eine Oberfläche (6) aufweist,
in der zumindest eine Ausnehmung (4) des Grundkörpers (2) vorhanden ist,
wobei nach außen ein stoffschlüssig mit dem Grundkörper (2) verbundener Abschluss der Ausnehmung (4) vorhanden ist,
der zumindest teilweise aus einem Lotwerkstoff besteht,
**dadurch gekennzeichnet, dass**
der Abschluss der Ausnehmung (4) nur durch eine Lötfolie (7) gebildet ist,
wobei die Lötfolie (7) aus einem Material des Grundkörpers (2) und einem Lotwerkstoff zusammengesetzt ist.

2. Werkstück nach Anspruch 1,
**dadurch gekennzeichnet,**
**dass** die Ausnehmung (4) ein Sackloch (5) ist.

3. Werkstück (1) nach Anspruch 1,
**dadurch gekennzeichnet,**
**dass** die Ausnehmung (4) ein Durchgangsloch (13) ist.

4. Werkstück (1) nach Anspruch 1,
**dadurch gekennzeichnet,**
**dass** das Werkstück (1) eine Turbinenschaufel bildet.

5. Werkstück (1) nach Anspruch 1 oder 4,
**dadurch gekennzeichnet,**
**dass** Werkstück (1) für Hochtemperaturanwendungen geeignet ist.

6. Werkstück (1) nach Anspruch 1, 4 oder 5,
**dadurch gekennzeichnet,**
**dass** das Werkstück (1) für korrosive und erosive Einsatzumgebungen geeignet ist.

7. Werkstück (1) nach Anspruch 1,
**dadurch gekennzeichnet,**
**dass** die Lötfolie (7) ein Gemisch aus einem bei Löttemperatur nicht aufschmelzenden Werkstoff, insbesondere dem Grundwerkstoff des Werkstücks (1), und einem aufschmelzenden Lotwerkstoff ist.

8. Werkstück (1) nach Anspruch 1 oder 7,
**dadurch gekennzeichnet,**
**dass** der Volumenanteil des nicht aufschmelzenden Werkstoffs den Volumenanteil des Lotwerkstoffs in der Lötfolie übersteigt, insbesondere bei 70% liegt.

9. Werkstück (1) nach Anspruch 1, 7 oder 8,
**dadurch gekennzeichnet,**
**dass** die Lötfolie (7) bis zu 4 Millimeter dick ist.

10. Werkstück (1) nach Anspruch 1, 4, 5 oder 6,
**dadurch gekennzeichnet,**
**dass** der Grundwerkstoff des Grundkörpers (2) eine Nickel-Basis-Superlegierung ist.

11. Werkstück nach Anspruch 1,
**dadurch gekennzeichnet,**
**dass** die Lötfolie (7) die Ausnehmung (4, 5) vollständig ausfüllt.

12. Werkstück nach Anspruch 1,
**dadurch gekennzeichnet,**
**dass** die Ausnehmung (4, 5, 13) im oberflächennahen Bereich eine umlaufende absatzförmige Querschnittsvertiefung (10) aufweist und die Lötfolie (7) auf einem Grund der Querschnittsvertiefung (10) zumindest teilweise aufliegt.

13. Verfahren zum Verschließen zumindest einer Öffnung (3) einer Ausnehmung (4,5,13) eines Werkstücks (1),
das im wesentlichen aus einem Grundkörper (2) gebildet ist,
der eine Oberfläche (6) aufweist,
bei dem die Ausnehmung (4,5,13) an der Oberfläche (6) nur mit einer Lötfolie (7) überdeckt oder zumindest teilweise ausgefüllt, und
dann zumindest teilweise mit dem Grundkörper (2) verlötet wird, **dadurch gekennzeichnet, dass** eine
Lötfolie (7) benutzt wird, welche aus einem Material des Grundkörpers (2) und einem Lotwerkstoff zusammengesetzt ist.

14. Verfahren nach Anspruch 13,
**dadurch gekennzeichnet,**
**dass** die zur Verlötung notwendige Wärme durch eine Wärmebehandlung des Werkstücks (1) aufgebracht wird, insbesondere durch eine Ausscheidungshärtung oder ein Lösungsglühen des Werkstücks (1).

## Claims

1. Workpiece (1) which is substantially formed from a base body (2) which has a surface (6) in which there is at least one recess (4) in the base body (2), a closure of the recess (4), which is cohesively joined to the base body (2) and at least partially comprises a solder material, being present on the outside, **characterized in that** the closure of the recess (4) is formed only by a soldering foil (7) in which the soldering foil (7) comprises a material of the base body (2) and a solder material.

2. Workpiece according to Claim 1, **characterized in that** the recess (4) is a blind bore (5).

3. Workpiece (1) according to Claim 1, **characterized in that** the recess (4) is a through-hole (13).

4. Workpiece (1) according to Claim 1, **characterized in that** the workpiece (1) forms a turbine blade or vane.

5. Workpiece (1) according to Claim 1 or 4, **characterized in that** the workpiece (1) is suitable for high-temperature applications.

6. Workpiece (1) according to Claim 1, 4 or 5, **characterized in that** the workpiece (1) is suitable for corrosive and erosive use environments.

7. Workpiece (1) according to Claim 1, **characterized in that** the soldering foil (7) is a mixture of a material which does not melt at the soldering temperature, in particular the base material of the workpiece (1), and a solder material which does melt.

8. Workpiece (1) according to Claim 1 or 7, **characterized in that** the proportion by volume of the non-melting material exceeds the proportion by volume of the solder material in the soldering foil, and is in particular 70%.

9. Workpiece (1) according to Claim 1, 7 or 8, **characterized in that** the soldering foil (7) is up to four millimeters thick.

10. Workpiece (1) according to Claim 1, 4, 5 or 6, **characterized in that** the base material of the base body (2) is a nickel-base superalloy.

11. Workpiece according to Claim 1, **characterized in that** the soldering foil (7) completely fills the recess (4, 5).

12. Workpiece according to Claim 1, **characterized in that** the recess (4, 5, 13), in the region close to the surface, has an encircling, shoulder-like cross-sectional depression (10), and the soldering foil (7) at least partially rests on a base of the cross-sectional depression (10).

13. Method for closing off at least one opening (3) of a recess (4, 5, 13) of a workpiece (1), which is essentially formed by a base body (2), having a surface (6), in which the recess (4, 5, 13) is covered or at least partially filled at the surface (6) only by a soldering foil (7), and the latter is then at least partially soldered to the base body (2), **characterized in that** a soldering foil (7) is used, which comprises a material of the base body (2) and a solder material.

14. Method according to Claim 13, **characterized in that** the heat required for the soldering is applied by a heat treatment of the workpiece (1), in particular by a precipitation hardening or solution annealing of the workpiece (1).

## Revendications

1. Pièce (1)
formée essentiellement d'un corps de base (2),
qui a une surface (6),
où se trouve au moins une cavité (4) du corps de base (2),
la cavité (4) ayant vers l'extérieur une fermeture, reliée par combinaison de matériau au corps de base (2),
qui est constituée au moins en partie d'un matériau de brasage,
**caractérisée en ce que**
la fermeture de la cavité (4) n'est formée que par une feuille de brasage (7),
la feuille de brasage (7) étant composée d'un matériau du corps de base (2) et d'un matériau de brasage.

2. Pièce selon la revendication 1,
**caractérisée en ce que**
la cavité (4) est un trou borgne (5).

3. Pièce (1) selon la revendication 1,
**caractérisée en ce que**
la cavité (4) est un trou traversant (13).

4. Pièce (1) selon la revendication 1,
**caractérisée en ce que**
la pièce (1) forme une aube de turbine.

5. Pièce (1) selon la revendication 1 ou 4,
**caractérisée en ce que**
la pièce (1) est propre à des utilisations à haute température.

6. Pièce (1) selon la revendication 1, 4 ou 5,
**caractérisée en ce que**
la pièce (1) est propre à une utilisation dans des environnements corrosifs et érosifs.

7. Pièce (1) selon la revendication 1,
**caractérisée en ce que**
la feuille de brasage (7) est un mélange formé d'un matériau qui ne fond pas à la température de brasage, en particulier le matériau de base de la pièce (1), et d'un matériau de brasage fusible.

8. Pièce (1) selon la revendication 1 ou 7,
**caractérisée en ce que**
la proportion volumique du matériau non fusible dépasse la proportion volumique du matériau de brasage dans la feuille de brasage et est en particulier d'environ 70 %.

9. Pièce (1) selon la revendication 1, 7 ou 8,
**caractérisée en ce que**
la feuille de brasage (7) a une épaisseur qui peut atteindre 4 millimètres.

10. Pièce (1) selon la revendication 1, 4, 5 ou 6,
**caractérisée en ce que**
le matériau de base du corps de base (2) est un superalliage à base de nickel.

11. Pièce selon la revendication 1,
**caractérisée en ce que**
la feuille de brasage (7) remplit entièrement la cavité (4, 5).

12. Pièce selon la revendication 1,
**caractérisée en ce que**
la cavité (4, 5, 13) a un évidement transversal (10) périphérique en gradin dans la zone proche de la surface et la feuille de brasage (7) repose au moins en partie sur un fond de l'évidement transversal (10).

13. Procédé pour fermer au moins une ouverture (3) d'une cavité (4, 5, 13) d'une pièce (1)
formée essentiellement d'un corps de base (2), qui a une surface (6),
dans lequel la cavité (4, 5, 13) sur la surface (6) n'est recouverte ou n'est au moins en partie remplie que par une feuille de brasage (7) et
ensuite est brasée au moins en partie au corps de base (2),
**caractérisé en ce qu'**on utilise une feuille de brasage (7) composée d'un matériau du corps de base (2) et d'un matériau de brasage.

14. Procédé selon la revendication 13,
**caractérisé en ce que**
la chaleur nécessaire au brasage est appliquée en soumettant la pièce (1) à un traitement thermique, en particulier en soumettant la pièce (1) à un durcissement par précipitation ou à un recuit de mise en solution.
